# EUROPÄISCHE PATENTANMELDUNG

(11) **EP 2 385 326 A2**
(43) Veröffentlichungstag der Anmeldung: **09.11.2011**
(21) Anmeldenummer: 11164308.6
(22) Anmeldetag: 29.04.2011
(51) Int. Cl.: F24J 2/52, H01L 31/042, H01L 31/048

(54) **Montagesatz für Solarmodule auf einer ebenen Fläche**

(30) Priorität: 06.05.2010 DE 202010005391 U
(71) Anmelder: Gerold, Jürgen, 33102 Paderborn (DE)
(72) Erfinder: Gerold, Jürgen, 33102 Paderborn (DE)
(74) Vertreter: Hanewinkel, Lorenz

(57) **Zusammenfassung**

Die Erfindung bezieht sich auf einen Montagesatz für die Montage von einer Vielzahl von Solarmodulen (3) einer Solaranlage auf einer ebenen Fläche, mit einer Mehrzahl von Bodenschienen (2), die zu mehreren parallel verlegten Bodensträngen (1) zusammengefasst sind, und mit quer dazu aus Fußschienen (8) gebildeten Fußtraversen (7), wobei die unteren Kanten der Solarmodulen (3) in die Fußtraversen (7) eingeschoben sind, und die obere Kanten der Solarmodule (3) an parallel zu den Fußschienen (8) aufgestellten Kopfschienen (13) befestigt sind, wobei die Kopfschienen (13) auf den Bodensträngen (1) mittels Aufstellwinkel (16) abgestützt sind und die Kopfschienen (13) eine jeweils eine Windleitfläche (14) bilden, die von Ausbrüchen (15) in einem Lochmuster durchsetzt ist.

## Beschreibung

Die Erfindung betrifft einen Montagesatz für die Montage von einer Vielzahl von Solarmodulen einer Solaranlage auf einer ebenen Fläche, mit einer Mehrzahl von Bodenschienen, die zu mehreren parallel verlegten Bodensträngen zusammengefasst sind, und mit quer dazu aus Fußschienen gebildeten Fußtraversen.

Unterkonstruktionen für die Montage von Solarmodulen sind in vielfältiger Form bekannt. Dabei ist aber immer sehr viel Montageaufwand erforderlich. So ist aus der Offenlegungsschrift DE 10 2006 028 494 A1 eine Tragkonstruktion für Solarmodule bekannt, die aus Winkelprofilen besteht, die auf der Fläche einzeln vernietet oder verschraubt werden müssen.

Aus der Gebrauchsmusterschrift DE 20 2009 007 516 U1 ist ein Bauteilesatz für die Montage von Solarmodulen bekannt, der kompliziert gepresste Profilschienen mit angepassten Verbindungsbolzen enthält. Diese Konstruktion ist aufwendig und damit teuer.

Aus der Offenlegungsschrift DE 10 2005 030 039 A1 ist eine Leichtbaukonstruktion bekannt, mit der Solarmodule auf einem Flachdach aufgestellt werden können, ohne das Flachdach zu beschädigen. Zur Abhebesicherung sind zwei zusätzliche Windleitbleche pro Solarmodul vorgesehen.

Die Gebrauchsmusterschrift DE 20 2009 009 244 U1 beschreibt einen Modulleichtbauträger aus Kunststoff für ein Solarmodul, der auf Unterlagschienen aus Leichmetall befestigt werden kann. Er weist eine Form auf, die strömungsoptimiert sein soll, um ein Abheben bei Windlast zu verhindern.

Es ist die Aufgabe der Erfindung einen Montagesatz für Solarmodule auf einer ebenen Fläche zu offenbaren, der aus wenigen, einfach zu handhabenden Schienen besteht, die alle aus Leichtmetallblechen hergestellt werden können und dem keine Befestigung der Schienen auf der ebenen Fläche notwendig ist.

Diese Aufgabe wird durch die Merkmale des Anspruchs 1 gelöst.

Die abhängigen Ansprüche beschreiben vorteilhafte Ausgestaltungen der Erfindung.

Der Montagebausatz ist für die Befestigung einer Vielzahl von Solarmodulen auf ebenen Flächen vorgesehen. Dies können Flachdächer, leicht geneigte Dachformen oder auch sonstige Flächen sein. Als Solarmodule kommen dabei Paneele für Photovoltaik aber auch solarthermische Kollektoren in Frage.

Auf der Fläche werden eine Mehrzahl von Bodenschienen zu mehreren Bodensträngen verbunden und diese parallel auf der Fläche verlegt. Quer auf den Bodensträngen werden Fußtraversen befestigt, die jeweils aus einer Mehrzahl von Fußschienen gebildet sind. Auf diese Weise ergibt sich ein Strang-Traversen-Gitter, auf dem die Solarmodule befestigt werden. Dazu werden Kopfschienen benutzt, die abgekantete Aufstellwinkel besitzen und damit auf den Bodensträngen, parallel zu den Fußschienen, abgestützt befestigt sind. Die Solarmodule werden mit einer Seite in der Fußschiene eingesteckt und mit der gegenüberliegenden Seite an der Kopfschiene befestigt. Damit ist das Solarmodul sicher auf dem Gitter gehalten. Es ist unter dem Winkel aufgestellt, der durch den Aufstellwinkel der Kopfschiene vorgegeben ist.

Die Kopfschiene bildet auch eine Windleitfläche, die sich von dem Bodenstrang bis zu der oberen Kante des Solarmoduls erstreckt. Sie ist mit Ausbrüchen in einem Lochmuster versehen, die einen definierten Luftdurchlass darstellen. Neben der Hinterlüftung der Solarmodule wird damit auch bei starkem Wind ein Anpressdruck auf die ebene Fläche erzeugt, die ein Abheben der Solaranlage von der ebenen Fläche verhindert. Eine Befestigung der Bodenstränge auf der ebenen Fläche ist nicht notwendig und damit eine Beschädigung der Dachhaut vermieden. Auch eine Beschwerung der Bodenstränge, wie sie oft üblich ist, ist bei diesem Bausatz nicht notwendig.

Eine Ausführungsform des Montagesatzes wird anhand der Figuren 1 bis 6 näher beschrieben. Es zeigen:
Fig. 1 eine Fläche mit aufgestellten Solarmodulen;
Fig. 2 eine Draufsicht auf Bodenstränge mit darauf befestigten Fußtraversen und Kopfschienen;
Fig. 3 eine Seitenansicht zu Fig. 2;
Fig. 4 eine Verbindung von zwei Bodenschienen;
Fig. 5 einen Querschnitt durch eine Fußschiene mit eingestecktem Solarmodul;
Fig. 6 eine perspektivische Ansicht von zwei verbunden Kopfschienen.

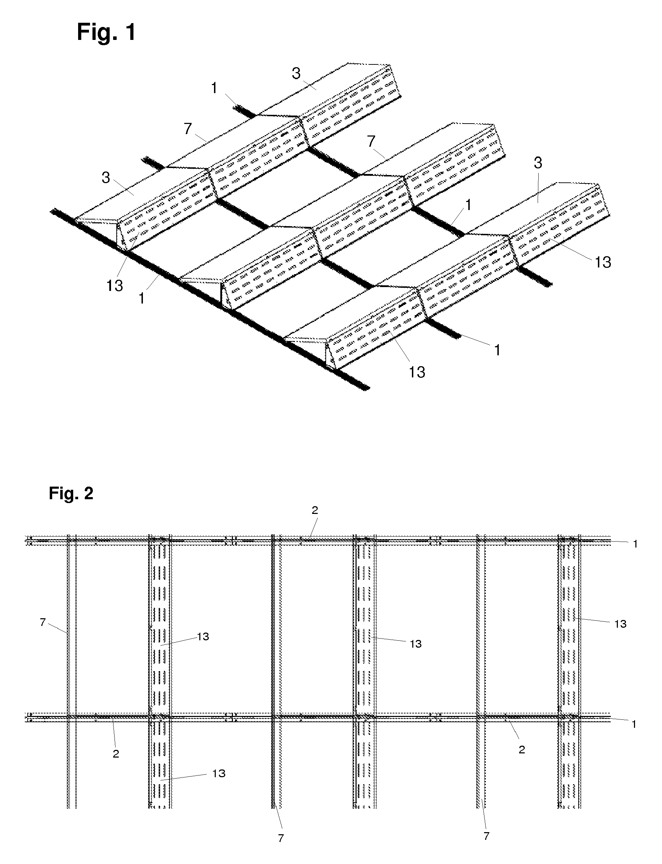

In Fig. 1 ist eine Gesamtansicht einer Solaranlage aus drei Reihen von je drei Solarmodulen 3 dargestellt. Auf den Bodensträngen 1 sind quer die Fußtraversen 7 befestigt, in die die Solarmodule 3 eingesteckt sind. Sie Stützen sich an den Kopfschienen 13 ab, deren Fläche als Windleitfläche ausgeführt ist.

In der Draufsicht gemäß Fig. 2 sind die Bodenschienen 2 dargestellt, die die Bodenstränge 1 bilden. Quer dazu sind die Fußtraversen 7 angeordnet, die auf den Bodensträngen 1 befestigt sind. Die Kopfschienen 13 sind parallel zu den Fußtraversen 7 ebenfalls auf den Bodensträngen 1 befestigt. Auf dem Boden des U-Profils der Fußschienen sind Löcher vorgesehen, über die sie auf den Langlöchern der Bodenschienen 2 befestigt wird. Auf diese Weise wird das stabile Strang-Traversen-Gitter gebildet.

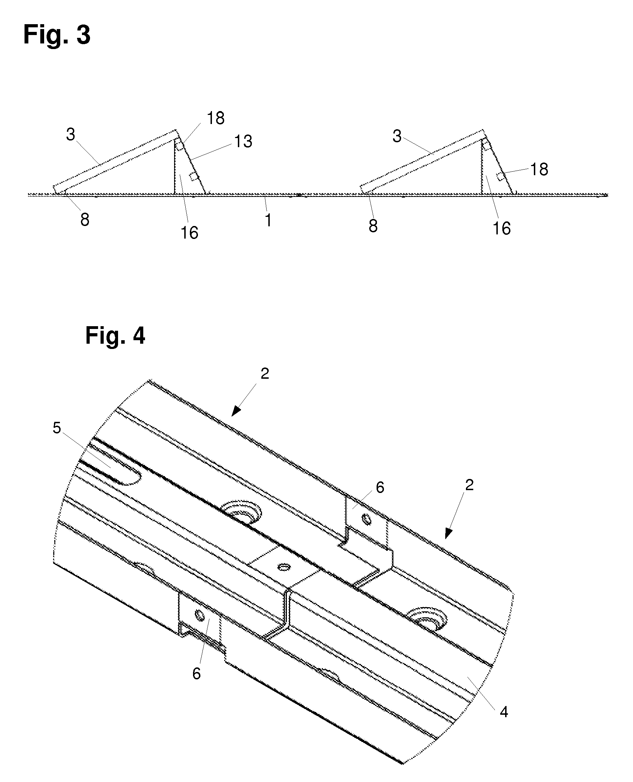

In der Seitenansicht gemäß Fig. 3 ist zu erkennen, wie die Solarmodule 3 zwischen der Fußschiene 8 und der Kopfschiene 13 befestigt sind. Die abgekanteten Aufstellwinkel 16 der Kopfschienen 13 sind auf dem Bodenstrang 1 befestigt. Die Laschen 18 an der Kopfschiene 13 zur Verbindung der Kopfschienen 13 untereinander sind der Fläche des Aufstellwinkels 16 entnommen.

Die Bodenschienen 2 sind im Detail in Fig. 4 dargestellt. Sie besitzen ein Doppel-U-Profil. Auf dem sich damit ergebenden Mittelsteg 4 sind Langlöcher 5 zur Befestigung der Fußtraversen und der Aufstellwinkel der Kopfschienen eingebracht. Die Böden der U-Profile weisen Löcher auf, durch die Wasser ablaufen kann.

An einem Ende der Bodenschiene 2 sind Laschen mit Befestigungslöchern vorhanden, die sich bei der Bildung eines Bodenstranges mit entsprechenden Löchern der nächsten Bodenschiene überdecken und damit zur festen Aneinanderreihung der Bodenschienen zu Bodensträngen genutzt werden.

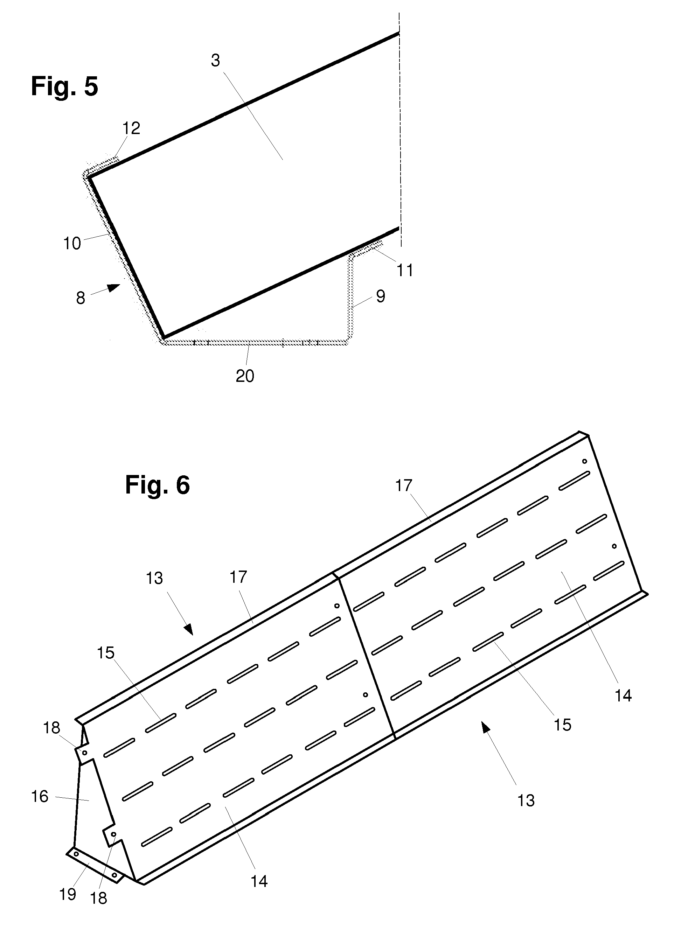

Die Fußschiene 8 besitzt, wie in Fig. 5 dargestellt, ein U-Profil, dessen erste Seitewand 9 einen nach außen abgewinkelten Rand 11 besitzt und dessen zweite Seitewand 10 rechtwinklig zu dem abgewinkelten Rand 11 aufgebogen ist. Diese zweite Seitenwand 10 besitzt wiederum einen dazu nach innen abgewinkelten Kragen 12 , so dass ein Solarmodul 3, abgestützt auf dem abgewinkelten Rand 11 der ersten Seitenwand 9, an die zweite Seitenwand 10stoßen kann und von dem Kragen 12 gesichert ist. Auf dies Weise kann ein Solarmodul in die Fußschiene eingesteckt und gesichert sein.

Zwei Kopfschienen 13 sind in Fig. 6 dargestellt. Sie besitzen an ihrer oberen Kante einen Flansch17, an dem das Solarmodul befestigt wird. Die Montage der Solarmodule ist damit sehr einfach, nämlich nur das Einstecken in die Fußschiene und das Befestigen an der Kopfschiene 13.

Der Aufstellwinkel 16 ist durch eine abgekantete dreiecksförmige Fläche an einer Seite der Kopfschiene 13 gebildet. Es ist also kein weiteres Bauteil dafür vorgesehen.

Die Verbindung der Kopfschienen 13 untereinander erfolgt über an der Seite des Aufstellwinkels 16 hervorstehende Laschen 18, die der Fläche des Aufstellwinkels 16 entnommen sind. Sie passen zu entsprechenden Löchern an der gegenüberliegenden Seite der Kopfschienen 13. Auch diese Laschen sind Bestandteil der Kopfschiene 13 und somit ist kein zusätzliches Bauteil erforderlich.

Der Aufstellwinkel 16 besitzt an seinem unteren Ende einen nach außen abgekanteten Flansch 19, der zur Befestigung auf den Bodensträngen dient.

Die Kopfschiene 13 besitzt eine Windleitfläche 14, die von der oberen Kante des Solarmoduls bis zu den Bodenschienen reicht und von mehreren Ausbrüchen 15 in einem Lochmuster durchsetzt ist.

Die Bauteile des hier beschriebenen Montagesatzes sind vorzugsweise aus Blechen aus korrosionsfestem Leichtmetall, wie etwa Aluminium, hergestellt.

Die Befestigung der Bodenschienen, Fußschienen und Kopfschienen untereinander erfolgt einfach über Nieten oder Schrauben.

Die gesamte Montage einer Solaranlage kann mit einem solchen Bausatz von einem Handwerker erledigt werden. Alle Bauteile sind leicht und einfach miteinander zu verbinden.

### Bezugszeichen

- 1: Bodenstrang
- 2: Bodenschiene
- 3: Solarmodul
- 4: Mittelsteg
- 5: Langloch
- 6: Befestigungslasche
- 7: Fußtraverse
- 8: Fußschiene
- 9: erste Seitenwand
- 10: zweite Seitenwand
- 11: abgewinkelter Rand
- 12: Kragen
- 13: Kopfschiene
- 14: Windleitfläche
- 15: Ausbruch
- 16: Aufstellwinkel
- 17: Flansch an 13
- 18: Lasche an 13
- 19: Flansch an 16
- 20: Boden von 8

## Patentansprüche

1. Montagesatz für die Montage von einer Vielzahl von Solarmodulen (3) einer Solaranlage auf einer ebenen Fläche, mit einer Mehrzahl von Bodenschienen (2), die zu mehreren parallel verlegten Bodensträngen (1) zusammengefasst sind, und mit quer dazu aus Fußschienen (8) gebildeten Fußtraversen (7), **dadurch gekennzeichnet, dass** die unteren Kanten der Solarmodulen (3) in die Fußtraversen (7) eingeschoben sind, und die obere Kanten der Solarmodule (3) an parallel zu den Fußschienen (8) aufgestellten Kopfschienen (13) befestigt sind, wobei die Kopfschienen (13) auf den Bodensträngen (1) mittels Aufstellwinkel (16) abgestützt sind und die Kopfschienen (13) eine jeweils eine Windleitfläche (14) bilden, die von Ausbrüchen (15) in einem Lochmuster durchsetzt ist.

2. Montagesystem nach Anspruch 1, **dadurch gekennzeichnet, dass** die Bodenschienen (2) ein Doppel-U-Profil besitzen, die auf ihrem Mittelsteg (4) Langlöcher (5) zur Befestigung der Fußtraversen (7) und der Kopfschienen (13) aufweisen.

3. Montagesystem nach Anspruch 1, **dadurch gekennzeichnet, dass** an einem Ende der Bodenschiene (2) Laschen mit Befestigungslöchern vorhanden sind, die sich bei der Bildung eines Bodenstranges (1) mit entsprechenden Löchern der nächsten Bodenschiene (2) überdecken und zur festen Aneinanderreihung genutzt werden.

4. Montagesystem nach Anspruch 1, **dadurch gekennzeichnet, dass** die Fußschiene (8) ein U-Profil besitzt dessen erste Seitewand (9) einen nach außen abgewinkelten Rand (11) besitzt und die zweite Seitewand (10) rechtwinklig zu dem abgewinkelten Rand (11) aufgebogen ist und einen dazu wiederum nach innen abgewinkelten Kragen (12) besitzt, so dass ein Solarmodul (3), abgestützt auf dem abgewinkelten Rand (11) der ersten Seitenwand (9), an die zweite Seitenwand (10) stoßen kann und von dem Kragen (12) gesichert ist.

5. Montagesystem nach Anspruch 4, **dadurch gekennzeichnet, dass** auf dem Boden des U-Profils Löcher vorgesehen sind, über die die Fußschiene (8) auf den Langlöchern der Bodenschienen (2) befestigt wird.

6. Montagesystem nach Anspruch 1, **dadurch gekennzeichnet, dass** die Kopfschiene (13) eine Windleitfläche (14) besitzt, die von der oberen Kante des Solarmoduls bis zu den Bodenschienen reicht und von mehreren Öffnungen (15) durchbrochen ist.

7. Montagesystem nach Anspruch 1, **dadurch gekennzeichnet, dass** die Kopfschiene (13) an ihrer oberen Kante einen Flansch (17) besitzt, an dem das Solarmodul (3) befestigt wird.

8. Montagesystem nach Anspruch 1, **dadurch gekennzeichnet, dass** der Aufstellwinkel (16) eine abgekantete dreiecksförmige Fläche an einer Seite der Kopfschiene (13) ist.

9. Montagesystem nach Anspruch 1, **dadurch gekennzeichnet, dass** die Kopfschiene (13) an der Seite des Aufstellwinkels (16) hervorstehende Laschen (18) besitzt, die der Fläche des Aufstellwinkels (16) entnommen sind.

10. Montagesystem nach Anspruch 9, **dadurch gekennzeichnet, dass** die hervorstehenden Laschen (18) die Verbindung mit der nächsten Kopfschiene (13) ermöglichen.

11. Montagesystem nach Anspruch 8, **dadurch gekennzeichnet, dass** der Aufstellwinkel (16) einen abgekanteten Flansch (19) besitzt, über den die Befestigung der Kopfschiene (13) auf den Bodenstrang (1) erfolgt.

12. Montagesystem nach Anspruch 1, **dadurch gekennzeichnet, dass** die Bodenschienen, Fußschienen und Kopfschienen aus korrosionsfestem Metall hergestellt sind.

13. Montagesystem nach Anspruch 1, **dadurch gekennzeichnet, dass** die Befestigung der Bodenschienen, Fußschienen und Kopfschienen untereinander über Nieten oder Schrauben erfolgt.
